# EUROPEAN PATENT APPLICATION

(11) **EP 0 807 568 A2**
(43) Date of publication of application: **19.11.1997**
(21) Application number: 97106890.3
(22) Date of filing: 25.04.1997
(51) Int. Cl.: B62K 19/46

(54) **Built-in storage compartment for motocycles, scooters or the like**

(30) Priority: 13.05.1996 IT BO960261
(71) Applicant: Sodo, Diego, 80127 Napoli (IT)
(72) Inventor: Sodo, Diego, 80127 Napoli (IT)
(74) Representative: Modiano, Guido, Dr.-Ing.

(57) **Abstract**

A built-in storage compartment for motorcycles, scooters or the like, comprising an open-top hollow (2) which is formed in the rear region of the vehicle body (3) and is adapted to act selectively as a rack or as a coupling base for a detachable box-like container (7) the walls whereof blend with the hollow (2) and the body (3), the container (7) having any size and shape according to requirements and being interchangeable.

## Description

The present invention relates to a built-in storage compartment for motorcycles, scooters or the like.

Open racks, usually made of metal tube, or panniers for crash-helmets or various items, usually constituted by a carryall case with rounded edges made of materials such as plastics, are known in the particular field of storage compartments for motorcycles, scooters or the like: these accessories are usually provided separate from the vehicle and can be removed, if necessary, usually by using screwdrivers, wrenches or the like for racks, whilst crash-helmet panniers can be removed by means of quick-release systems but leave fixing plates or brackets fixed to the vehicle body once they have been removed.

In some motorcycle-like vehicles there are also provided small storage compartments located at the front, at the rear or under the saddle which can be accessed in various manners, usually by means of a door fitted with a key or not.

Such conventional devices, even in the case of panniers for various items, entail the drawback of limited versatility, in that each one can only perform its specific function: the rack in fact cannot act as a crash-helmet holder and viceversa, and the pannier provided in the vehicle body has dimensions which can be at the most barely sufficient to contain one or two helmets not of the full-face type; the user, who may in each instance need racks or panniers having varying dimensions or a helmet holder, is therefore very often in difficulty because he does not have the specific accessory and the hollow he requires.

The aim of the present invention is to obviate the above-described drawbacks of conventional devices, providing a built-in storage compartment for motorcycles, scooters or the like which can effectively perform several functions according to requirements.

Within the scope of this aim, an object of the present invention is to achieve said aim with a structure which is simple, relatively easy to provide in practice, safe in use, effective in operation, and has a relatively low cost.

This aim, this object and others which will become apparent hereinafter are achieved by a built-in storage compartment for motorcycles, scooters or the like, characterized in that it comprises an open-top hollow which is formed in the rear region of the vehicle body and is adapted to act selectively as a rack or as a coupling base for a detachable box-like container the walls whereof blend with the hollow and the body, said container being interchangeable.

Further characteristics and advantages of the present invention will become apparent from the following detailed description of a preferred but not exclusive embodiment of a built-in storage compartment for motorcycles, scooters or the like according to the invention, illustrated only by way of non-limitative example in the accompanying drawings, wherein:

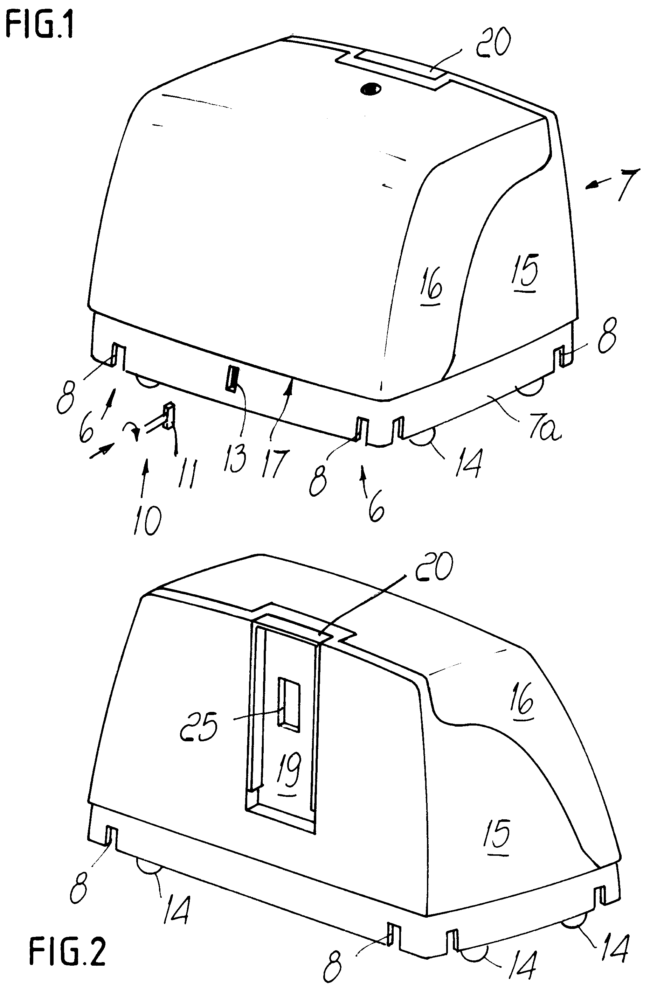

figure 1 is a rear perspective view of a built-in storage compartment for motorcycles, scooters or the like according to the present invention;
figure 2 is a front perspective view of the storage compartment;
figure 3 is a rear perspective view of the storage compartment installed on a scooter;
figure 4 is a rear perspective view of the storage compartment installed on a scooter, in the open condition;
figure 5 is a rear perspective view of an enlarged embodiment of the storage compartment installed on a scooter;
figure 6 is a rear perspective view of a scooter from which the storage compartment has been removed;
figure 7 is a rear perspective view of a second type of scooter, from which the storage compartment has been removed;
figure 8 is a rear perspective view of the storage compartment installed on the second scooter;
figure 9 is a rear perspective view of an enlarged embodiment of the storage compartment installed on the second scooter;
figure 10 is a rear perspective view of an accessory installed in the hollow shown in figure 7;
figure 11 is a rear perspective view of a second embodiment of the hollow illustrated in figure 7.

With particular reference to the above figures, the reference numeral 1 generally designates a built-in storage compartment for motorcycles, scooters or the like according to the present invention.

The storage compartment 1 comprises an open-top hollow 2 which is formed in the rear region of the body 3 of the vehicle 4, behind the saddle; the hollow 2, in the cases shown in the figures, is open to the rear and upwards and preferably has a perimetric ridge 5 in its lower region: the hollow 2 is adapted to act selectively as a rack or as a coupling base for a removable box-like container 7, the walls whereof blend with the hollow 2 and with the body 3, the hollow 2 being provided with engagement means 6 for the box-like container 7.

The engagement means 6 are preferably of the type which interlocks by sliding downwards and are constituted for example by one or more slots 8 of the lower edge of a lower perimetric border 7a of the container 7, which frontally engage corresponding teeth 9 protruding inside the lower ridge 5 of the hollow 2: commercial means 10 for locking the sliding motion are provided which are constituted for example by a lock with a bolt 11, which can be actuated by sliding and rotation by means of a knob 12, preferably provided with a security key, and is adapted to fit in an elongated slot 13 of the perimetric border 7a.

The container 7 is provided, in a downward region, with at least two wheels 14; in the illustrated case, there are provided four wheels arranged at the four corners of the base of the container 7, facilitating its transport and concealed by the perimetric ridge 5 of the hollow when the container is inserted in the hollow.

The box-like container 7 is formed by two half-shells 15 and 16 hinged to each other about a lower rear transverse horizontal line 17 and engageable by a commercial key-operated bolt 18.

In a planned alternative embodiment, the half-shells 15 and 16 can be hinged to each other about an upper front line.

In the upper region of the front wall of the container 7 there is provided a flat parallelepiped-like seat 19, wherein a telescopically extendable handle 20 is retractably mounted, facilitating hand carrying of the container like a trolley.

A light source 22 and its corresponding control switch 23 are provided in the front part 21 of the hollow 2, and the wall 24 of the container 7 has an opening 25 at the light source 22; as an alternative, the light source is arranged inside the container 7 and a pin-type connection to a corresponding fixed electric socket located in the hollow is provided.

The container 7 may have a horizontal bellows-like band which allows it to increase in size if necessary; the container 7 may also have a plurality of walls made of soft material which allow it to extend further to vary its loading possibilities.

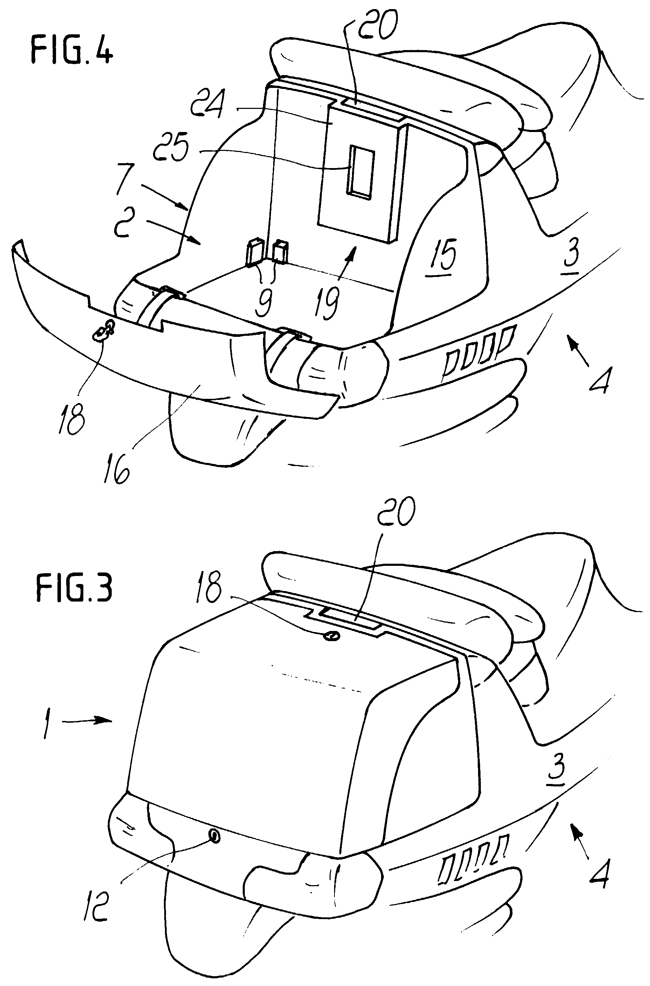

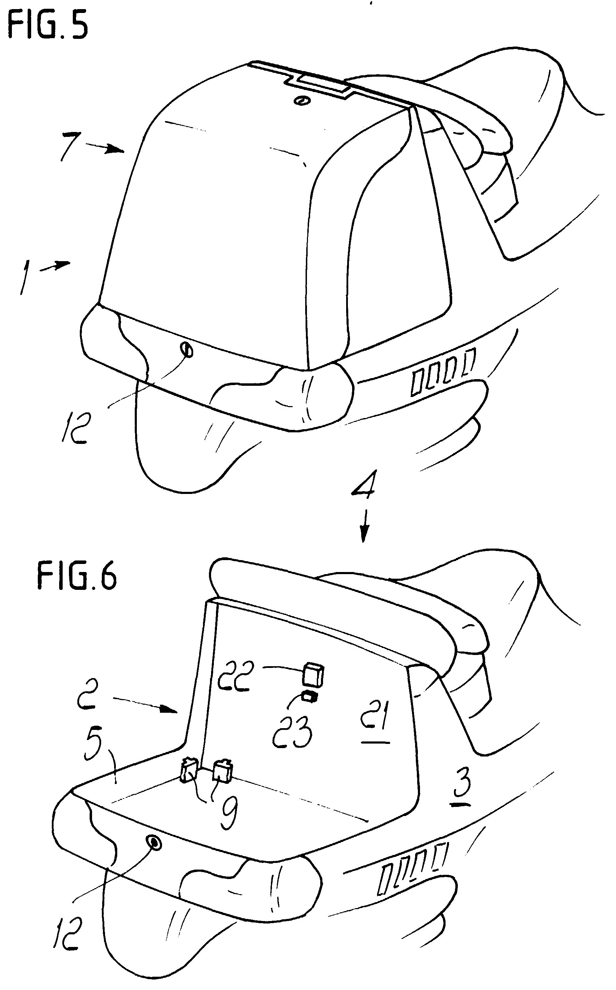

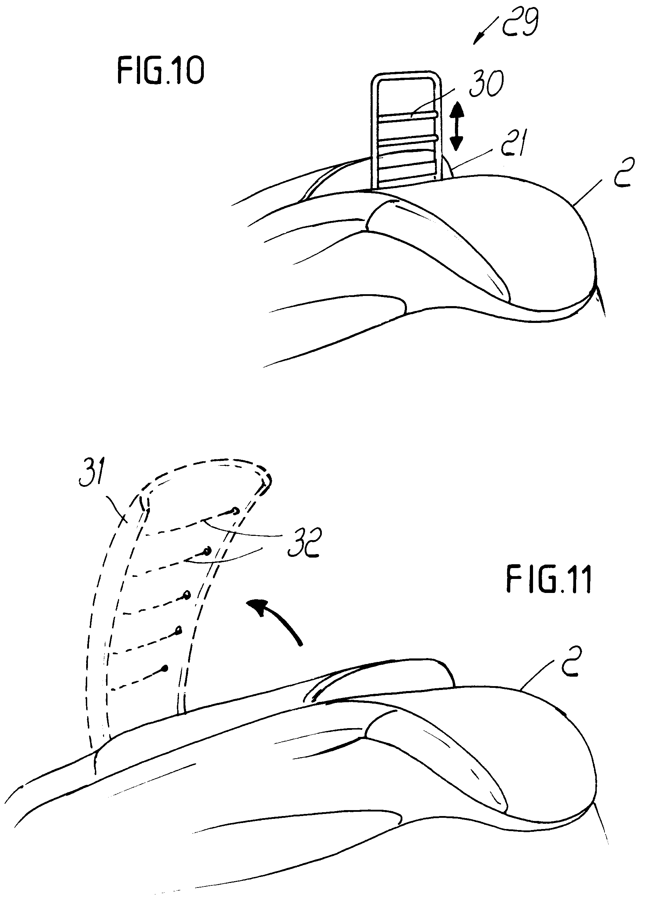

As shown in figures 5 and 9, the container may also have larger vertical dimensions than the corresponding containers of figures 3, 4 and 8 which make it protrude upwards even to a considerable extent.

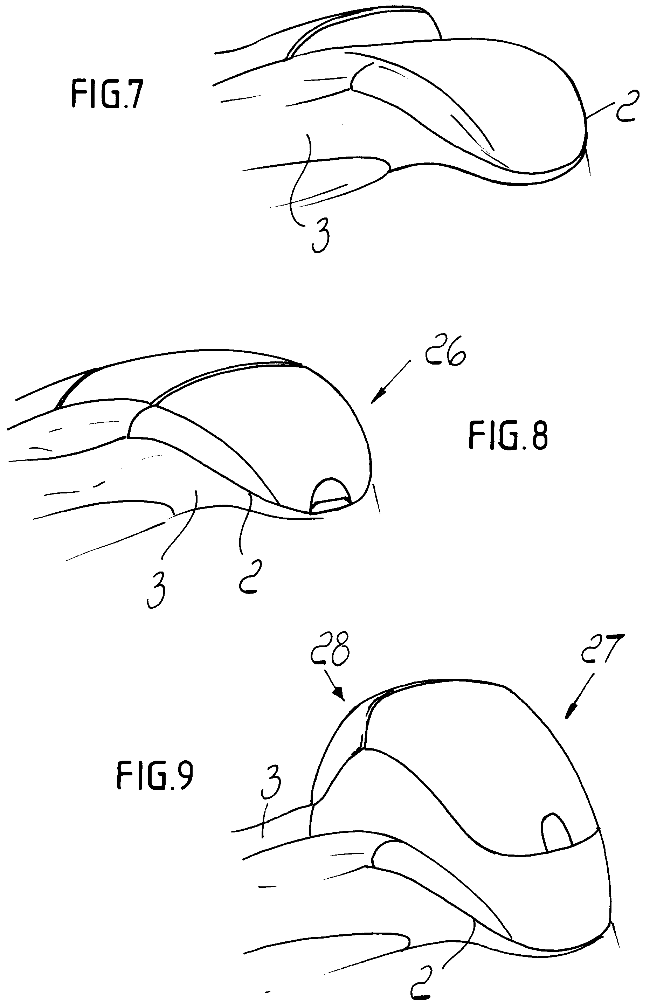

Figures 7, 8 and 9 illustrate the body 3 of a scooter with a more rounded profile: it is noted that the open-top hollow 2 has more rounded sides and that the containers 26 and 27 are more rounded and have different shapes and dimensions: the container 27 can have, in a front region, a profile 28 which is appropriately inclined and padded and is adapted to act as a backrest.

The interchangeable rear containers 7 can have dimensions and be divided and equipped internally with accessories of any kind in order to make them adapted for carrying professional gear (samples, catalogs, tools for electricians, mechanics, maintenance technicians of any kind) or gear for leisure, sport, tourism or the like.

Figure 10 illustrates a hollow 2 having, at the front part 21, a retractable inverted U-shaped frame 29 with cross-members 30 which is moved to an upper position to allow to engage parcels or the like by means of elastic cords: the frame 29 can either slide vertically or be hinged about an axis lying transversely to the base of the hollow 2.

In the embodiment illustrated in figure 11, a portion 31 of the saddle can be tilted forward, in front of the hollow 2, moved to a raised position, and locked therein in order to extend the hollow 2 forwards and allow to place significantly long baggage; the underside of the saddle is advantageously provided with fixing straps or elastic cords 32.

It has thus been shown that the present invention achieves the intended aim and object and in particular that it can provide, if the box-like element is removed, for an open-top rack or a capacious storage compartment which can be interchanged with others, even large ones, and even with a wheeled carryall case or trolley: the user can thus equip himself with the containers that he deems appropriate and interchange them or remove them in each instance as required.

The invention thus conceived is susceptible of numerous modifications and variations, all of which are within the scope of the inventive concept.

All the details may also be replaced with other technically equivalent ones.

In practice, the materials used, as well as the shapes and the dimensions, may be any according to requirements without thereby abandoning the protective scope of the appended claims.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A built-in storage compartment for motorcycles, scooters or the like, characterized in that it is constituted by an open-top hollow which is formed in the rear region of the vehicle body and is adapted to act selectively as a rack or as a coupling base for a detachable box-like container the walls whereof blend with the hollow and the body, said container being interchangeable.

2. A storage compartment according to claim 1, characterized in that manually-operated quick-coupling means are provided between said hollow and said box-like compartment.

3. A storage compartment according to claim 1, characterized in that said box-like container is provided, in a downward region, with at least two wheels which facilitate its transport.

4. A storage compartment according to claim 1, characterized in that a telescopically extendable handle is retractably mounted in the front part of said container.

5. A storage compartment according to claim 1, characterized in that a light source and the associated switch are provided in the front part of said hollow.

6. A storage compartment according to claim 1, characterized in that the front part of said container has an opening at said light source.

7. A storage compartment according to claim 1, characterized in that said box-like container has a bellows-like horizontal band which is adapted to allow its size to increase if required.

8. A storage compartment according to claim 2, characterized in that said quick-coupling means are of the type which interlocks by sliding downwards and in that means for locking the sliding action are provided which have security keys.

9. A storage compartment according to claim 8, characterized in that said means for locking the sliding action are constituted by a lock with a bolt which can be actuated by sliding and rotation by means of a knob, said bolt being adapted to fit into an elongated slot of the hollow border.

10. A storage compartment according to claim 1, characterized in that said box-like container is formed by two half-shells which are hinged to each other about a lower rear transverse line.

11. A storage compartment according to claim 1, characterized in that said box-like container is formed by two half-shells which are hinged to each other along an upper front transverse line.

12. A storage compartment according to claim 1, characterized in that in front of said hollow a portion of the saddle can be tilted forwards and locked so as to extend said hollow forwards.

13. A storage compartment according to claim 1, characterized in that said hollow has, at the front wall, an inverted U-shaped retracting frame which allows to couple parcels or the like by means of elastic cords.
